# EUROPÄISCHE PATENTANMELDUNG

(11) **EP 1 338 204 A1**
(43) Veröffentlichungstag der Anmeldung: **27.08.2003**
(21) Anmeldenummer: 03002671.0
(22) Anmeldetag: 12.02.2003
(51) Int. Cl.: A22C 13/00

(54) **Raupenförmige Verpackungshülle und Verfahren zur Herstellung einer gerafften Verpackungshülle**

(30) Priorität: 20.02.2002 DE 10207042
(71) Anmelder: Kalle GmbH & Co. KG, 65203 Wiesbaden (DE)
(72) Erfinder: Auf Der Heide, Christian, 49080 Osnabrück (DE); Auf Der Heide, Dirk, 49593 Bersenbrück (DE); Kallweit, Jürg-Heinrich, Prof.Dr., 49076 Osnabrück (DE)
(74) Vertreter: Zounek, Nikolai, Dipl.-Ing.

(57) **Zusammenfassung**

Die Erfindung betrifft eine ein- oder mehrschichtige raupenfömige Verpackungshülle auf Basis von synthetischen oder natürlichen Polymeren, die eine Raffdichte von bis zu 1 : 500, bei einer Länge der gerafften Raupe von 10 bis 200 cm aufweist sowie ein Verfahren zur Herstellung der Verpackungshülle.

## Beschreibung

Die Erfindung betrifft eine raupenförmige Verpackungshülle auf der Basis von synthetischen oder natürlichen Polymeren, insbesondere eine künstliche Wursthülle, die aus Schlauchmaterial gerafft ist und ein Verfahren zur Herstellung einer gerafften Verpackungshülle.

Es gibt bereits zahlreiche Kunststofffolien zur Verpackung von pastös oder schmelzflüssig abfüllbaren Lebensmitteln. In der Regel werden sie auf der Basis von Polyethylenterephthalat (PET), Polyvinylidenchlorid (PVDC) und Polyamid (PA) hergestellt. Biaxial verstreckte PET-Hüllen eignen sich jedoch nicht für Koch- und Brühwurst, da sie sich kaum dehnen lassen und auch nur wenig schrumpfen können. PVDC-Hüllen sind zwar wesentlich dehnbarer, verlieren aber nach dem Füllen leichter ihre Form. Dies wird besonders deutlich, wenn die Würste über längere Zeit hängen. Polyamidhüllen sind dehnbarer, schrumpfen mehr und sind deshalb für Koch- und Brühwurst besser geeignet.

In der DE-A 28 50 182 (≈ GB-A 2 035 198) ist eine in Längs- und Querrichtung schrumpffähig verstreckte und thermofixierte, einschichtige Hülle aus einem aliphatischen Polyamid, dessen Glasumwandlungspunkt im trockenen Zustand mindestens 48 °C beträgt und sich bei Feuchtigkeitsaufnahme auf mindestens 3 °C erniedrigt, beschrieben. Konkret offenbart sind Polyamid 6 (= Polycaprolactam), Polyamid 7 [= Poly(7-amino-heptansäurelactam) = Poly(χ-önanthsäurelactam)], Polyamid 6,6 (= Polyamid aus Hexamethylendiamin und Adipinsäure) und Polyamid 6,10 [= Polyamid aus Hexamethylendiamin und Decandisäure (= Sebacinsäure)].

Eine ähnliche Hülle ist in der DE-A 28 50 181(≈ GB-A 2 035 198) beschrieben. Sie besteht aus einem Polymerblend, das neben dem aliphatischen Polyamid noch ein Ionomerharz, ein modifiziertes Ethylen/Vinylacetat-Copolymer und/oder ein quartäres Polymer mit Einheiten aus Ethylen, Butylen, einer aliphatischen, ethylenisch ungesättigten (C₃-C₅)Carbonsäure und einem Ester dieser Carbonsäure mit (C₁-C₈)Alkoholen enthält. Die Hülle zeigt nach dem Anschneiden eine verringerte Neigung zum Weiterreißen. Diese Hüllen werden ebenfalls für Koch- und Brühwurst verwendet. Das Wurstbrät muss jedoch mit einem Druck von etwa 0,3 bis 0,6 bar eingefüllt werden, um die Hülle zu dehnen.

Da das Wurstbrät nach dem Brühen an Volumen verliert, muss die Hülle diesen Verlust ausgleichen, damit sie faltenfrei anliegt, d.h. sie muss in gleichem Maß schrumpfen wie ihr Inhalt. Die bekannten Hüllen sind aber nur begrenzt schrumpffähig und werden deshalb während des Füllvorgangs gedehnt. Der notwendige Fülldruck liegt dabei an der Grenze des mit den bekannten Wurstfüllmaschinen Möglichen. Bei einer Handabfüllung ist der Druck so gering, dass sich solche Hüllen vom Wurstbrät lösen ("die Hülle stellt ab") und Falten bilden würden, was die Wurst in den Augen des Verbrauchers "unansehnlich" und "nicht mehr frisch" erscheinen ließe.

Eine einschichtige Wursthülle aus einem Polyamid, das mindestens 5 % seines Gewichts an Wasser aufnehmen kann, ist in der DE-A 32 27 945 (≈ US-A 4 560 520/4 601 929) offenbart. Sie neigt weniger dazu, nach dem Anschneiden weiter aufzureißen, als die aus der DE-A 28 50 182 bekannte Wursthülle. Ausgangsmaterialien für diese Hülle sind insbesondere Polyamid 6 und Polyamid 6,6. Hergestellt wird sie durch Extrudieren, Verstrecken des extrudierten Schlauchs in Längs- und Querrichtung und anschließendes vollständiges Thermofixieren unter kontrollierter Schrumpfung. Die kontrollierte Schrumpfung beträgt in jeder Richtung 15 % bis etwa 40 %, im Regelfall etwa 20 %. Auch hier muss die Hülle durch erhöhten Druck während des Füllens aufgeweitet werden, wenn sie später faltenfrei bleiben soll.

Die mechanischen Eigenschaften von verstreckten Polyamidhüllen hängen stark von ihrem Wassergehalt ab. Es ist ein Mindestwassergehalt erforderlich, um die Hüllen während des Füllvorgangs ausreichend dehnbar und geschmeidig zu halten. Wasser und Wasserdampf erhöhen aber während des Brühens diesen Wassergehalt so, dass die mechanischen Eigenschaften der Hüllen negativ beeinflußt werden.

Eine einschichtige Hülle auf Polyamidbasis für Koch- und Brühwürste, die auch beim Brühen formstabil bleibt, ist in der EP-A 0 176 980 (= US-A 4 659 599) offenbart. Sie besteht aus einem Gemisch von Polyamid und Polyester. Das Polyamid ist ein gesättigtes, lineares, aliphatisches Polyamid, insbesondere PA 6, der Polyester ein Polyterephthalsäureester und/oder ein Copolyester mit Terephthalsäure- und Isophthalsäure-Einheiten. Durch die Polyester-Beimischung ist die Hülle relativ trüb und zeigt einen unnatürlichen metallischen Glanz. Sie ist zudem nur wenig dehnbar und muss unter vergleichbar hohem Druck gefüllt werden, wenn sie faltenfrei sein soll.

Die einschichtige, biaxial streckorientierte und thermofixierte Wursthülle gemäß der DE-A 39 43 024 (≈ US-A 5 326 613) ist glasklar, schimmert nicht metallisch oder perlmuttartig und zeigt eine hohe Rückstellelastizität. Hergestellt ist sie aus einem Polymerblend bestehend aus Polycaprolactam (= Polyamid 6) und einem aromatischen Copolyamid aus Hexamethylendiamin-, Terephthalsäure- und Isophthalsäure-Einheiten. Auch diese Hülle ist in erster Linie für die maschinelle Abfüllung unter Druck vorgesehen. Sie ist für eine manuelle Abfüllung weniger geeignet, weil sie meist nicht geschmeidig genug ist.

In der EP-A 0 573 306 ist eine schlauchförmige, mehrschichtige, biaxial verstreckte, schrumpffähige Wursthülle beschrieben. Die Hülle enthält eine Schicht aus einem Polymerblend, bestehend aus Polyamid 6 und mindestens 5 Gew.-% eines Copolyamids (z. B. PA 6,12 oder PA 6/69). Diese Schicht ist von anderen Schichten umgeben, speziell von Polyolefinschichten. Die Polyamidschicht ist im Vergleich zu den Polyolefinschichten relativ dünn. Die in der EP-A konkret offenbarten Nahrungsmittelhüllen sind sämtlich sechsschichtig.

Aus der DE-A 196 25 094 A1 (US-A 5 928 738) ist eine biaxial streckorientierte und thermofixierte ein- oder mehrschichtige raupenförmige Verpackungshülle auf Polyamidbasis bekannt, die eine Raffdichte von bis zu 1:200 bei einer Länge der gerafften Raupe von 40 bis 100 cm aufweist, sowie ein Verfahren zur Herstellung einer solchen Verpackungshülle. Die Wanddicke der Verpackungshülle liegt dabei in einem Bereich von 33 bis 55 µm. Vor dem Raffen dieser Verpackungshülle wird eine Sprühlösung aufgetragen, die als Raffgleitmittel einen Emulgator, Paraffinöl oder ein ähnlich wirksames Mittel enthält.

In der DE 297 14 638 U1 ist eine Vorrichtung zum Raffen von Wursthüllen mit einem schraubenmutterförmigen Raffelelement aus Oxydkeramik beschrieben. Die Zahnflanken und die Spitzen des Raffelements haben eine Oberflächengüte von Ra ≤ 0,3 µm. Mit dieser Vorrichtung können Wursthüllen raupenförmig zusammengeschoben werden, wobei die Raupen eine Länge von 40 bis 50 cm besitzen. Das Raffelement in Form einer Schraubenmutter ist mit einem Gehäuse fest verbunden, das mit Hilfe von Kugellagern drehbar gelagert ist, die in einem Ständer angeordnet sind. Das Gehäuse wird durch einen Zahnriemen mit Hilfe eines drehzahlgeregelten Elektromotors angetrieben. Durch die Verwendung von Oxydkeramik für das Raffelement wird eine erhebliche Verbesserung der Standzeit des Raffelements erzielt.

Bei bekannten raupenförmigen Verpackungshüllen zeigt sich, dass ab einer Raffdichte von 1 : 200 die Gleitreibung zwischen einer Raffstange und der auf dieser Raffstange aufsitzenden raupenförmigen Verpackungshülle so groß ist, dass eine fehlerfreie Konfektionierung nur noch schwierig durchzuführen ist. Es kann dabei zu Rafflöchern in der raupenförmigen Verpackungshülle oder auch zu Beschädigungen der Raffstange kommen. Die dabei auftretende hohe Gleitreibung beruht auf den hohen Adhäsionskräften zwischen der glatten Oberflächen-Kontaktfläche der Raffstange und dem sehr glatten Schlauchmaterial. Dies gilt beispielsweise insbesondere für den Fall, dass die Raffstange mit Teflon beschichtet ist, das eine sehr glatte Oberfläche besitzt, die dann mit dem glatten Schlauchmaterial der Polymerhülle zusammen sehr glatte Kontaktflächen ergibt, zwischen denen hohe Adhäsionskräfte auftreten. Insofern tritt bei der bekannten raupenförmigen Verpackungshülle das Problem auf, dass Raffdichten von größer als 1 : 200 die Konfektionierung der raupenförmigen Verpackungshüllen sehr schwierig gestalten.

Aufgabe der Erfindung ist es, eine raupenförmige Verpackungshülle größerer Raffdichte und größererRafflänge als bekannte raupenförmige Verpackungshüllen zur Verfügung zu stellen, die das schadenfreie Konfektionieren und Abziehen der gerafften Verpackungshülle von einer Raffstange ermöglichen.

Diese Aufgabe wird in der Weise gelöst, dass die Rauhigkeit des mit einer Raffstange im Kontakt befindlichen Schlauchmaterials und die Rauhigkeit der Raffstange zusammen eine mittlere Rauhigkeit von 0,5 bis 5 µm aufweisen, dass die Raffdichte größer 1 : 200 und bis zu 1 : 500 beträgt und dass die Raupe 10 bis 200 cm lang ist, bei einer Wandstärke des Schlauchmaterials von 20 bis zu 80 µm.

In Ausgestaltung der Erfindung beträgt die Wandstärke des Schlauchmaterials 20 bis 55 µm. Zweckmäßiger Weise ist auf das Schlauchmaterial vor dem Raffen eine Sprühlösung aufgetragen und enthält die Sprühlösung ein Gleitmittel. Der Einsatz von Emulsionen als Raffgleitmittel ist nicht zwingend notwendig, vielmehr reicht der Einsatz von Standardgleitmitteln, wie sie dem Fachmann bekannt sind, im Allgemeinen aus.

Zweckmäßigerweise hat das Schlauchmaterial in ungerafftem Zustand ein Kaliber von 20 bis 200 mm, insbesondere von 40 bis 140 mm.

Unter dem Begriffnatürliche Polymere sind u. a. Kollagen, Cellulose, faserverstärkte Cellulose, Kasein und sonstige aus natürlichen Rohstoffen gewonnene Polymere zu verstehen.

Die Festigkeit der Hülle darf während des Brühens (dies geschieht in der Praxis bei einer Temperatur von etwa 80 °C) nicht so weit abnehmen, dass sie platzt oder einreißt. Beim Abkühlen muss die Hülle mit dem Inhalt schrumpfen, ohne abzustellen oder gar Falten zu bilden. Dadurch wird gleichzeitig verhindert, dass sich Wurstgelee unter der Hülle ansammelt. Sie soll zudem immer soviel Spannung haben, dass die Wurst einen prallen und frischen Eindruck macht. Sie soll ausreichend geschmeidig sein und einen weichen Griff haben, damit sie auch für die manuelle Abfüllung der Wurst (bei einem gegenüber dem maschinellen Füllen verminderten Druck) geeignet ist. Der zum Verschließen der Wurstenden üblicherweise verwendete Metallclip soll auf der Hülle möglichst rutschfest sitzen, d.h. die Hülle soll eine hohe Reibung gegenüber Metall aufweisen. Die Hülle soll für Wasserdampf und Sauerstoff wenig durchlässig sein, um den Gewichtsverlust während der Lagerung gering zu halten und einem Verderb durch Oxidation vorzubeugen. Die Hülle ist im allgemeinen durch Farbpigmente bzw. Farbstoffe gefärbt, sie kann aber auch transparent sein und einen ansprechenden Glanz haben, da Würste in einer trüben oder milchigen Hülle vom Verbraucher wenig geschätzt werden. Sie soll schließlich aus preiswerten Rohstoffen einfach herstellbar sein.

Unter dem Begriff synthetische Polymere sind u. a. Polymerblends insbesondere auf der Basis von Polyamiden zu verstehen, wie sie nachstehend beispielhaft beschrieben sind.

In bevorzugter Weise enthält das Schlauchmaterial eine Polymermischung aus Polyamid 6 und 10 bis 90 Gew.-% eines Copolyamids aus Hexamethylendiamin-, Isophthalatsäure- und Terephthalsäure-Einheiten. Insbesondere enthält das Schlauchmaterial eine Polymermischung aus Polyamid 6 und 10 und bis 30 Gew.-% eines Copolyamids.

In weiterer Ausgestaltung der Erfindung besteht das Schlauchmaterial aus
a) Polyamid 6,
b) 5 bis 50 Gew.-%, bezogen auf das Gesamtgewicht aller Polymere in der Schicht, eines
   b₁) aliphatischen Copolyamids mit Einheiten der Formeln -NH-[CH₂]₅-CO- und -NH-[CH₂]ₘ-CO-, wobei m eine ganze Zahl von 7 bis 11 ist, und/oder eines
   b₂) aliphatischen Copolyamids mit Einheiten der Formeln -NH-[CH₂]₅-CO-, -NH-[CH₂]ₙ-NH- und -CO-[CH₂]ₒ-CO-, wobei n eine ganze Zahl von 6 bis 12 und o eine ganze Zahl von 7 bis 10 ist,
   gegebenenfalls
c) bis zu 20 Gew.-% eines amorphen Copolyamids mit Hexamethylendiamin-, Terephthalsäure- und Isophthalsäure-Einheiten
   und gegebenenfalls
d) bis zu 20 Gew.-% eines mit Carboxygruppen modifizierten Polyolefins.

Die Summe der Gewichtsprozente der Komponenten a) bis d) ist gleich 100, wenn keine der weiter unten genannten Bestandteile hinzugefügt werden.

Das molare Verhältnis der Einheiten der Formel -NH-[CH₂]₅-CO- zu denen der Formel -NH-[CH₂]ₘ-CO- in dem aliphatischen Copolyamid b₁) beträgt bevorzugt von 95:5 bis 20:80, besonders bevorzugt von 60:40 bis 30:70. Das molare Verhältnis der Einheiten der Formel -NH-[CH₂]₅-CO- zu denen der Formeln -NH-[CH₂]ₙ-NH- und -CO-[CH₂]ₒ-CO- in den aliphatischen Copolyamiden b₂) beträgt bevorzugt von 95:5 bis 25:75, besonders bevorzugt von 70:30 bis 30:70. Die Einheiten der Formeln -NH-[CH₂]ₙ-NH- und -CO-[CH₂]ₒ-CO- liegen dabei in praktisch äquimolaren Mengen vor.

In den aliphatischen Copolyamiden b₁) ist m bevorzugt 7 oder 11, d.h. die Einheiten der Formel -NH-[CH₂]ₘ-CO- sind bevorzugt solche aus 8-Amino-octansäure (= 8-Amino-caprylsäure) oder 12-Amino-dodecansäure (= 12-Amino-laurinsäure).

In den aliphatischen Copolyamiden b₂) ist n bevorzugt 6 und o bevorzugt 7, 8 oder 10, d.h. die Einheiten der Formel -NH-[CH₂]ₙ-NH- sind bevorzugt solche aus Hexan-1,6-diyldiamin (= Hexamethylendiamin) und die Einheiten der Formel -CO-[CH₂]ₒ-CO- sind bevorzugt solche aus Nonandisäure (= Azelainsäure), Decandisäure (= Sebacinsäure) oder Dodecandisäure. Das Copolyamid aus Hexamethylendiamin und Azelainsäure wird allgemein als Polyamid 69 (oder Polyamid 6,9), das aus Hexamethylendiamin und Sebacinsäure als Polyamid 610 (oder Polyamid 6,10) und das aus Hexamethylendiamin und Dodecandisäure als Polyamid 612 (oder Polyamid 6,12) bezeichnet. Das Copolyamid mit Einheiten aus ε-Caprolactam, Hexamethylendiamin und Azelainsäure wird schließlich als Polyamid 6/69 bezeichnet. Hüllen, die die Komponente b₂) enthalten, zeigen eine besonders gute Transparenz.

Der Anteil der Komponente b) beträgt bevorzugt 10 bis 30 Gew.-%, der des - durch die Terephthalsäure- und Isophthalsäure-Einheiten teilweise aromatischen - amorphen Copolyamids c) bevorzugt 5 bis 15 Gew.-%, jeweils bezogen auf das Gesamtgewicht aller Polymere in der Schicht. Copolyamide mit Hexamethylendiamin- und Terephthalsäure- bzw. Isophthalsäure-Einheiten werden abgekürzt als PA 6-T bzw. PA 6-I bezeichnet.

Das mit Carboxygruppen modifizierte Polyolefin d) ist bevorzugt ein Copolymer mit Einheiten aus Ethylen und (Meth)acrylsäure. (Meth)acrylsäure steht dabei für Acrylsäure und Methacrylsäure. Die (Meth)acrylsäure-Einheiten haben darin bevorzugt einen Anteil 2 bis 25 Gew.-%. Der Anteil der Komponente d) beträgt bevorzugt ebenfalls 5 bis 15 Gew.-%, wiederum bezogen auf das Gesamtgewicht der Polymeren in der Schicht. Vor allem die Komponenten c) und d) bewirken die verringerte Durchlässigkeit der Hülle für Sauerstoff und Wasserdampf.

Die erfindungsgemäße Verpackungshülle enthält im allgemeinen noch Farbstoffe, Pigmente und/oder Verarbeitungshilfsmittel. Der Anteil dieser Bestandteile ist relativ gering, so dass die wesentlichen Eigenschaften der Verpackungshülle dadurch praktisch unbeeinflußt bleiben.

In einer Ausführungsform enthält die erfindungsgemäße Verpackungshülle 40 bis 80 Gew.-% der Komponente a), 10 bis 30 Gew.-% der Komponente b) und jeweils 5 bis 15 Gew.-% der Komponenten c) und d). Das optimale Verhältnis der Komponenten richtet sich auch nach dem Durchmesser der Verpackungshülle, ihrer Wandstärke und der Art der Verwendung.

In einer weiteren Ausführungsform besteht die Verpackungshülle aus einem Material, das aus einer Gruppe gewählt ist, die unverstreckte Polyamidfolien (UPA-Folien), PVDC-Folien, Kollagen-, Cellulose- und Faserdärme enthält.

Die raupenförmige Verpackungshülle hat im Vergleich zu einer Hülle aus reinem Polyamid 6 eine wesentlich höhere Geschmeidigkeit und einen besseren "Griff'. Sie umschließt die gebrühten Würste nach dem Erkalten wesentlich straffer als bisher gewohnt, obwohl die Schrumpfspannung (gemessen in Querrichtung in trockenem Zustand bei 100 °C) gegenüber herkömmlichen Hüllen verringert ist.

Die raupenförmige Verpackungshülle enthält erfindungsgemäß mehr als eine Schicht wie sie voranstehend beschrieben ist. Insbesondere sind zwei bis fünf derartige Schichten für das Schlauchmaterial vorgesehen.

Bei einem Verfahren zur Herstellung einer noch nicht gerafften Verpackungshülle werden die Komponenten, die die Hülle bzw. die einzelnen Schichten der Hülle bilden, in eine homogene Schmelze überführt. Die Schmelze wird durch eine oder mehrere Ringdüsen extrudiert und dabei zu einem nahtlosen Schlauch geformt, der anschließend in Längs- und Querrichtung verstreckt wird. Das Verfahren ist dadurch gekennzeichnet, dass mindestens eine Schicht der Verpackungshülle aus dem obengenannten Polymerblend hergestellt wird. Das Mischen und Aufschmelzen kann in einem separaten Mischextruder erfolgen. Die durch Extrusion hergestellte nahtlose Schlauchfolie wird allgemein durch den Druck eines innen eingefüllten Gases (im Normalfall Luft) und durch Anlegen einer Zugspannung in Längsrichtung (z.B. durch ein Rollenpaar) in Längs- und Querrichtung verstreckt. Dieses als "Blasformen" bezeichnete Verfahren ist dem Fachmann allgemein bekannt. Durch das Verstrecken erlangt die Hülle eine wesentlich höhere Festigkeit. Um die unter Wärmeeinwirkung eintretende Schrumpfung zu verringern, wird die Schlauchfolie durch eine zusätzliche Wärmebehandlung teilfixiert ("Thermofixierung"). Die fertige Verpackungshülle zeigt allgemein in 80 °C heißem Wasser eine Schrumpfung von 5 bis 25 % in Längs- und Querrichtung. Die Dicke der verstreckten und thermofixierten Verpackungshülle beträgt 10 bis 50 µm, bevorzugt 10 bis 30 µm.

Für spezielle Anwendungen ist die erfindungsgemäße Verpackungshülle auch mehrschichtig. Sie ist dann dadurch gekennzeichnet, dass sie mindestens eine Schicht aus dem oben angegebenen Polyamidblend enthält. Die weiteren Schichten bestehen bevorzugt aus Polyamiden (z. B.

Polyamid 6), Polyamidmischungen, Polyolefinen wie Polyethylen oder Polypropylen, aber auch aus Polyolefinen, die mit haftvermittelnden funktionellen Gruppen ausgestattet sind, Copolymeren mit Einheiten aus ethylenisch ungesättigten Monomeren (z. B. Vinylacetat, Vinylalkohol, Acryl- und Methacrylsäure) sowie Vinylidenchlorid- oder Acrylnitril-Copolymeren, Ionomerharzen oder Mischungen der vorgenannten Polymeren.

Die Mehrschichthülle besteht normalerweise aus 2 bis 5 Schichten. Vorzugsweise folgen der Schicht aus dem angegebenenPolyamidblend alternierend weitere Schichten vom Typ Polyolefin und Polyamid. Hergestellt wird eine solche Hülle durch Coextrusion mit Hilfe von Ringdüsen, die entsprechend der Zahl der Schichten speziell konstruiert sind. Dies bedeutet allerdings einen erheblich höheren technischen Aufwand.

Anschließend kann die ein- oder mehrschichtige Verpackungshülle mit einem Aufdruck versehen, abschnittsweise zu Raupen gerafft oder in kleinere, einseitig abgebundene Stücke zerschnitten werden. Die kurzen, einseitig abgebundenen Stücke werden bei der manuellen Herstellung der Wurst verwendet, während die Raupen bei der maschinellen Herstellung von Würsten, insbesondere von Kranzwürsten, eingesetzt werden.

Das Raffen des Schlauchmaterials bzw. der Verpackungshülle geschieht mit sehr hoher Raffdichte, wozu es erforderlich ist, die Gleitreibungseigenschaften zwischen einer Raffstange, bei der es sich im Allgemeinen um einen Raffdorn handelt, und der zu raffenden Verpackungshülle so zu modifizieren, dass eine fehlerfreie Konfektionierung der gerafften Verpackungshülle möglich ist. Dies kann nur dann geschehen, wenn in der gerafften Verpackungshülle keine Rafflöcher durch den Raffvorgang entstehen und darüber hinaus darf auch die Oberfläche der Raffstange nicht beschädigt werden. Die Gleitreibung zwischen der Raffstange, bei der es sich im Allgemeinen um eine Metallstange mit Teflonbeschichtung handelt, und der Verpackungshülle muss in einer Weise minimiert werden, dass die Gleitreibung kleiner als die Gleitreibung bei weitgehender Adhäsion zwischen einer glatten Schlauchmaterial-Kontaktfläche und einer glatten Kontakt-Oberfläche der Raffstange und auch kleiner als die Reibungskräfte zwischen einer aufgerauhten Kontaktfläche des Schlauchmaterials und einer aufgerauhten Kontakt-Oberfläche der Raffstange ist. Diese Reibungskräfte bewirken im Allgemeinen ein Verhaken und Blockieren dieser Kontaktflächen.

In Ausgestaltung des erfindungsgemäßen Verfahrens werden die Rauhigkeit der Schlauchmaterial-Kontaktfläche und die Rauhigkeit der Kontaktoberfläche der Raffstange so ausgelegt, dass sie zusammen eine mittlere Rauhigkeit von 0,5 bis 5 µm aufweisen. Dabei wird die Gleitreibung durch die Einstellung einer definierten Rauhigkeit der Kontaktoberfläche der Raffstange minimiert. Dazu wird in zweckmäßiger Weise die Kontaktoberfläche der Raffstange mit einer mittleren Rauhigkeit von 0,3 bis 4,8 µm aufgerauht.

In Ausführung des Verfahrens wird ein Schlauchmaterial mit einer Wandstärke von 20 bis 55 µm und einer Länge von größer 40 m bis 1000 m zu einer knickfesten und füllfertigen Raupe mit einer Raupenlänge von 20 bis 200 cm gerafft.

Derart geraffte Verpackungshüllen werden u. a. für Kranzwürste verwendet, wobei die Verpackungshülle knickfest und füllfertig auf ein Füllrohr für das Wurstbrät aufschiebbar ist.

Die Raupen können dabei ohne vorangehende Wässerung auf das Füllrohr einer Abfüllmaschine für das Wurstbrät aufgeschoben werden. Die Länge der Raupe liegt im Bereich von 10 bis 200 cm, was bei einer Raffdichte größer 1 : 200 bis zu 1 : 500 bedeutet, dass die Länge der ungerafften Verpackungshülle bis zu 1000 m beträgt. Das Kaliber der ungerafften Verpackungshülle liegt im Bereich von 20 bis 200 mm, insbesondere beträgt es 40 bis 140 mm. Die Verpackungshülle ist u. a. als Kranzhülle für Kranzwürste ausgelegt, die beispielsweise einen Innendurchmesser von 160 bis 180 mm haben. Durch geläufige Verfahrensmaßnahmen wird erreicht, dass sich beim Abfüllen die Verpackungshülle abschnittsweise zu einem Kranz kringelt.

Die vor dem Raffen der Verpackungshülle aufgebrachte Sprühlösung enthält beispielsweise Kaliumsorbat und Milchsäure, deren Konzentrationen in Gew.-% so gewählt wird, dass die Sprühlösung einen pH-Wert kleiner oder gleich 6 hat. Der Sprühlösung wird ferner ein Bakterizid mit ca. 0,1 bis 0,3 Gew.-% sowie ein Gleitmittel zugesetzt. Im Allgemeinen enthält die Sprühlösung nur ein Standardgleitmittel. Zusätzlich kann z. B. Glycerin mit 2 bis 25 Gew.-% der Sprühlösung beigefügt werden. Ebenso kann als Zusatz für die Sprühlösung eine Öl/Wasseremulsion mit einem Emulgator als oberflächenaktive Substanz vorgesehen sein, bei der es sich beispielsweise um einen Sorbitfettsäureester handelt. Als Öl wird u. a. ein Triglycerid verwendet. Die Konzentration dieses Zusatzes liegt im Bereich von 5 bis 10 Gew.-%.

In den nachfolgenden Beispielen steht **G**t für **G**ewichts**t**eile.

### Beispiele 1 bis 3

Aus Dryblendmischungen von 90 Gew.-% Polyamid PA 6 (Ultramid B4) und 10 Gew.-% Copolyamid PA 6I/6T (Grivory G21) im Beispiel 1, 85 Gew.-% Polyamid PA 6 und 15 Gew.-% Copolyamid PA 6I/6T im Beispiel 2 und 80 Gew.-% PA 6 und 20 Gew.-% PA 6I/6T im Beispiel 3 wird in einem Eins chneckenextruder bei 235 °C eine homogene Schmelze plastifiziert und über eine Ringdüse zu einem Vorschlauch von 19 mm Durchmesser und 0,30 mm Wandstärke durch Kühlung abgeschreckt. Anschließend wird dieser Schlauch erwärmt und innerhalb der Streckzone simultan biaxial verstreckt. Dabei werden folgende Streckverhältnisse eingehalten:

| | |
|---|---|
| Querstreckverhältnis: | 1:3,5 |
| Längsstreckverhältnis: | 1:2,8 |

Auf diese Weise werden Schlauchfolien von 63 mm Durchmesser mit einer Wandstärke von 0,030 mm erhalten.

Die Hüllen werden in einem weiteren Verfahrensschritt mit Hilfe einer weiteren Blase unter Vermeidung eines Längs- und Querschrumpfes thermofixiert. Diese so erhaltenen Verpackungshüllen sind unter 80 °C nicht bzw. kaum mehr schrumpffähig, jedoch weiterreißfest, so dass sie zu Raupen gerafft werden können.

Derartige Verpackungshüllen umhüllen die darin abgefüllte Wurst über eine Kühllagerdauer von 6 Wochen faltenfrei. Nach dieser Zeit ist an der Wurstoberfläche noch keine Vergrauung eingetreten. Geleeabsatz ist nicht vorhanden; beim Schälen der Würste ist ein Anhaften des Wurstgutes an der Folie zu verzeichnen.

### Beispiel 4

Ein Gemisch aus
- 80 Gt: Polyamid 6 (die relative Viskosität einer 1 Gew.-%igen Lösung des Polyamids in 96 %iger Schwefelsäure bei 20 °C beträgt 4)
- 10 Gt: Polyamid 6/69 (^{(R)}Grilon CF62BS der Ems-Chemie AG) (Schmelzvolumenindex: 40 ml in 10 min bei 190 °C und 10 kg Belastung) und
- 10 Gt: Ethylen/Methacrylsäure-Copolymer(^{(R)}Nucrel0903 HC der DuPont de Nemours Inc.) (Schmelzindex: 2,5 g in 10 min bei 190 °C und 2,16 kg Belastung)
wurde in einem Einschnecken-Extruder bei 240 ° C zu einer homogenen Schmelze plastifiziert und durch eine Ringdüse zu einem Schlauch von 18 mm Durchmesser extrudiert. Der Polymerschlauch wurde zunächst schnell abgekühlt, dann auf die zum Verstrecken erforderliche Temperatur erwärmt, nach dem Blasformverfahren verstreckt und schließlich thermofixiert, wobei das Streckverhältnis in Längs- und Querrichtung unverändert bleibt. Das Flächenstreckverhältnis betrug 9,8. Der Schlauch hatte einen Durchmesser im Bereich von 66 bis 68 mm und eine Wandstärke von 0,27 µm.

### Beispiel 5

### Ein Gemisch aus

- 70 Gt: Polyamid 6 (wie im Beispiel 4),
- 10 Gt: Polyamid 6/69 (wie im Beispiel 4),
- 10 Gt: amorphes Polyamid 6-I/6-T (^{(R)}Selar PA 3426 der DuPont de Nemours Inc.) (Schmelz-index: 90 g in 10 min bei 275 °C und einer Belastung von 10 kg) und
- 10 Gt: Ethylen/Methacrylsäure-Copolymer (wie im Beispiel 4)
wurden wie im Beispiel 4 beschrieben zu einer verstreckten und thermofixierten Verpackungshülle verarbeitet. Die Dimensionen der Hülle waren ebenfalls identisch mit denjenigen des Beispiels 4. Des Weiteren wurde ein Schlauch von 12 mm Durchmesser extrudiert und im Verhältnis 1:1,66 querverstreckt und anschließend im Verhältnis 1 : 5,9 längsgestreckt, so dass eine ungeraffte Verpackungshülle mit einem Kaliber von 20 mm und einer Wandstärke von 36 µm erhalten wurde.

### Beispiel 6

### Ein Gemisch aus

- 60 Gt: Polyamid 6 (wie im Beispiel 4),
- 20 Gt: Polyamid 6/69 (wie im Beispiel 4),
- 10 Gt: amorphes Polyamid 6-I/6-T (wie im Beispiel 5) und
- 10 Gt: Ethylen/Methacrylsäure-Copolymer (wie im Beispiel 4)
wurde wie beschrieben zu einer biaxial verstreckten und thermofixierten Verpackungshülle verarbeitet. Auch hier waren die Dimensionen des Produkts identisch mit denjenigen des Beispiels 4.

### Beispiel 7

### Ein Gemisch aus

- 50 Gt: Polyamid 6 (wie im Beispiel 4),
- 30 Gt: Polyamid 6/69 (wie im Beispiel 4),
- 10 Gt: amorphes Polyamid 6-I/6-T (wie im Beispiel 5) und
- 10 Gt: Ethylen/Methacrylsäure-Copolymer (wie im Beispiel 4)
wurde wie beschrieben zu einer biaxial verstreckten und thermofixierten Verpackungshülle verarbeitet. Das Flächenstreckverhältnis betrug 13,6, der Durchmesser derfertigen Verpackungshülle 66 mm und die Wandstärke 20 µm. Aus dem gleichen Gemisch wurde ein Schlauch mit einem Durchmesser von 15 mm extrudiert und mit einem Flächenstreckverhältnis 11,8 verstreckt. Der Durchmesser der fertigen ungerafften Verpackungshülle betrug 45 mm, ein bevorzugtes Kaliber der Verpackungshülle, und die Wandstärke 23 µm.

### Beispiel 8

### Ein Gemisch aus

- 65 Gt: Polyamid 6 (wie im Beispiel 4),
- 15 Gt: Polyamid 612 (^{(R)}Grilon CF6S der Ems-Chemie AG) (Schmelzindex: 50 g in 10 min bei 190 ° C und einer Belastung von 10 kg),
- 10 Gt: amorphes Polyamid 6-I/6-T (wie im Beispiel 5) und
- 10 Gt: Ethylen/Methacrylsäure-Copolymer (wie im Beispiel 4)
wurde wie beschrieben zu einer biaxial verstreckten und thermofixierten Verpackungshülle verarbeitet. Das Flächenstreckverhältnis betrug 12,8, der Durchmesser derfertigen Verpackungshülle 63 mm und die Wandstärke 25 µm.

### Beispiel 9

### Ein Gemisch aus

- 50 Gt: Polyamid 6 (wie im Beispiel 4),
- 30 Gt: Polyamid 612 (wie im Beispiel 8),
- 10 Gt: amorphes Polyamid 6-I/6-T (wie im Beispiel 5) und
- 10 Gt: Ethylen/Methacrylsäure-Copolymer (wie im Beispiel 4)
wurde wie beschrieben zu einer biaxial verstreckten und thermofixierten Verpackungshülle verarbeitet. Das Flächenstreckverhältnis betrug ebenfalls 12,8 und der Durchmesser der fertigen Verpackungshülle 63 mm und die Wandstärke 26 µm.

### Beispiel 10

Zur Herstellung einer mehrschichtigen Verpackungshülle wurden folgende Polymergemische verwendet:

### Gemisch A:

- 80 Gt: Polyamid 6 (wie im Beispiel 4), 10 Gt amorphes Polyamid 6-I/6-T (wie im Beispiel 5) und
- 10 Gt: Polyamid 6/6,9 (wie im Beispiel 4)

### Gemisch B:

- 70 Gt: Polyethylen niederer Dichte (^{(R)}Lupolen 1441D der BASF AG) mit einem Schmelzindex von 0,2 g in 10 min bei 190 °C und 2,16 kg Belastung und
- 30 Gt: eines linearen Polyethylens niederer Dichte (LLDPE), das durch Modifizierung mit Maleinsäureanhydrid haftvermittelnd gegenüber Polyamid ausgerüstet ist (^{(R)}Escor CTR 2000 von Exxon) mit einem Schmelzindex von 3 g in 10 min bei 190 °C und 2,16 kg Belastung

### Gemisch C:

- 85 Gt: Polyamid 6 (wie im Beispiel 4),
- 15 Gt: amorphes Polyamid 6-I/6-T (wie im Beispiel 5)

Diese Gemische wurden in drei Einschnecken-Extrudern bei jeweils 240 °C zu homogenen Schmelzen plastifiziert, anschließend in einer 3-Schicht-Ringdüse zusammengeführt und zu einem Schlauch von 18 mm Durchmesser coextrudiert. Dieser Schlauch wurde wie beschrieben zu einer biaxial verstreckten und thermofixierten Verpackungshülle verarbeitet. Das Flächenstreckverhältnis betrug 9,6 und der Durchmesser der fertigen Verpackungshülle 66 mm. Bei einer Gesamtfolienstärke von 30 µm wiesen die Schichten folgende Dicken auf:
Außenschicht (Gemisch A): 16 µm
Mittelschicht (Gemisch B): 11 µm
Innenschicht (Gemisch C): 3 µm

Für die Beispiele 1 bis 10 gilt ganz allgemein, daß der Durchmesser des extrudierten Schlauches 12 bis 70 mm betragen kann, je nach dem Durchmesser der verwendeten Ringdüse für die Schlauchextrusion und dass durch die Wahl des Flächenstreckverhältnisses im Bereich von 8,0 bis 15 die biaxial verstreckte, thermofixierte, ungeraffte Verpackungshülle einen Durchmesser im Bereich von 20 bis 70 mm und Wandstärken von 20 µm bis 30 µm aufweist.

## Patentansprüche

1. Raupenfömige Verpackungshülle auf der Basis von synthetischen oder natürlichen Polymeren, insbesondere eine künstliche Wursthülle, die aus Schlauchmaterial gerafft ist, **dadurch gekennzeichnet, dass** die Rauhigkeit des mit einer Raffstange im Kontakt befindlichen Schlauchmaterials und die Rauhigkeit der Raffstange zusammen eine mittlere Rauhigkeit von 0,5 bis 5 µm aufweisen, dass die Raffdichte größer 1 : 200 ist und bis zu 1: 500 beträgt und die Raupe 10 cm bis 200 cm lang ist, bei einer Wandstärke des Schlauchmaterials von 20 bis zu 80 µm.

2. Raupenfömige Verpackungshülle nach Anspruch 1, **dadurch gekennzeichnet, dass** die Wandstärke des Schlauchmaterials 20 bis 55 µm beträgt.

3. Raupenfömige Verpackungshülle nach Anspruch 1, **dadurch gekennzeichnet, dass** auf das Schlauchmaterial vor dem Raffen eine Sprühlösung aufgetragen ist und dass die Sprühlösung ein Gleitmittel enthält.

4. Raupenfömige Verpackungshülle nach Anspruch 1, **dadurch gekennzeichnet, dass** das Schlauchmaterial in ungerafftem Zustand ein Kaliber von 20 bis 200 mm, insbesondere von 40 bis 140 mm hat.

5. Raupenförmige Verpackungshülle nach Anspruch 1, **dadurch gekennzeichnet, dass** das Schlauchmaterial eine Polymermischung von Polyamid 6 und 10 bis 90 Gew.-% eines Copolyamids aus Hexamethylendiamin-, Isophthalsäure- und Terephthalsäure-Einheiten enthält.

6. Raupenförmige Verpackungshülle nach Anspruch 5, **dadurch gekennzeichnet, dass** das Schlauchmaterial eine Polymermischung aus Polyamid 6 und 10 bis 30 Gew.-% eines Copolyamids enthält.

7. Raupenförmige Verpackungshülle nach Anspruch 1, **dadurch gekennzeichnet, dass** das Schlauchmaterial aus
a) Polyamid 6,
b) 5 bis 50 Gew.-%, bezogen auf das Gesamtgewicht aller Polymere in der Schicht, eines
b₁) aliphatischen Copolyamids mit Einheiten der Formeln -NH-[CH₂]₅-COund -NH-[CH₂]ₘ-CO-, wobei m eine ganze Zahl von 7 bis 11 ist, und/oder eines
b₂) aliphatischen Copolyamids mit Einheiten der Formeln -NH-[CH₂]₅-CO-, -NH-[CH₂]ₙ-NH- und -CO-[CH₂]ₒ-CO-, wobei n eine ganze Zahl von 6 bis 12 und o eine ganze Zahl von 7 bis 10 ist,
gegebenenfalls
c) bis zu 20 Gew.-% eines amorphen Copolyamids mit Hexamethylendiamin-, Terephthalsäure- und Isophthalsäure-Einheiten
und gegebenenfalls
d) bis zu 20 Gew.-% eines mit Carboxygruppen modifizierten Polyolefins
besteht.

8. Raupenförmige Verpackungshülle nach Anspruch 7, **dadurch gekennzeichnet, dass** das molare Verhältnis der Einheiten der Formel -NH-[CH₂]₅-CO- zu den Einheiten der Formel -NH-[CH₂]ₘ-CO- in dem aliphatischen Copolyamid b₁) von 95:5 bis 20:80, bevorzugt von 60:40 bis 30:70 beträgt.

9. Raupenförmige Verpackungshülle nach Anspruch 7 oder 8, **dadurch gekennzeichnet, dass** das molare Verhältnis der Einheiten der Formel -NH-[CH₂]₅-CO- zu den Einheiten der Formeln -NH-[CH₂]ₙ-NH- und -CO-[CH₂]ₒ-CO- in den aliphatischen Copolyamiden b₂) von 95:5 bis 25:75, bevorzugt von 70:30 bis 30:70 beträgt.

10. Raupenförmige Verpackungshülle nach einem der Ansprüche 7 bis 9, **dadurch gekennzeichnet, dass** in den aliphatischen Copolyamiden b₁) m = 7 oder 11 ist.

11. Raupenförmige Verpackungshülle nach einem der Ansprüche 7 bis 10, **dadurch gekennzeichnet, dass** in den aliphatischen Copolyamiden b₂) n = 6 und o = 7, 8 oder 10 ist.

12. Raupenförmige Verpackungshülle nach einem der Ansprüche 7 bis 11, **dadurch gekennzeichnet, dass** der Anteil der Komponente b) 10 bis 30 Gew.-%, der der Komponente c) 5 bis 15 Gew.-%, und der der Komponente d) ebenfalls 5 bis 15 Gew.-%, jeweils bezogen auf das Gesamtgewicht aller Polymere in der Schicht, beträgt.

13. Raupenförmige Verpackungshülle nach einem der Ansprüche 7 bis 12, **dadurch gekennzeichnet, dass** das mit Carboxygruppen modifizierte Polyolefin d) ein Copolymer mit Einheiten aus Ethylen und (Meth)acrylsäure ist.

14. Raupenfömige Verpackungshülle nach einem der Ansprüche 1 bis 4, **dadurch gekennzeichnet, dass** die Verpackungshülle aus einem Material besteht, das aus einer Gruppe ausgewählt ist, die unverstreckte Polyamidfolien (UPA-Folien), PVDC-Folien,

15. Raupenförmige Verpackungshülle, **dadurch gekennzeichnet, dass** sie mehr als eine Schicht gemäß einem der Ansprüche 7 bis 13 enthält.

16. Raupenförmige Verpackungshülle nach Anspruch 15, **dadurch gekennzeichnet, dass** der Schicht aus dem angegebenen Polyamidblend alternierend weitere Schichten vom Typ Polyolefin und Polyamid folgen.

17. Verfahren zur Herstellung einer gerafften Verpackungshülle auf der Basis von synthetischen oder natürlichen Polymeren, insbesondere eine künstliche Wursthülle, die aus Schlauchmaterial gerafft ist, **dadurch gekennzeichnet, dass** die Gleitreibung zwischen dem Schlauchmaterial und einer Oberfläche einer Raffstange, auf der das Schlauchmaterial gerafft wird, so minimiert wird, dass die Gleitreibung sowohl kleiner als die Gleitreibung bei weitgehender Adhäsion zwischen einer glatten Schlauchmaterial-Kontaktfläche und einer glatten Kontakt-Oberfläche der Raffstange als auch kleiner als die Reibungskräfte zwischen einer aufgerauhten Kontaktfläche des Schlauchmaterials und einer aufgerauhten Kontakt-Oberfläche der Raffstange ist.

18. Verfahren nach Anspruch 17, **dadurch gekennzeichnet, dass** die Rauhigkeit der Schlauchmaterial-Kontaktfläche und die Rauhigkeit der Kontakt-Oberfläche der Raffstange so ausgelegt werden, dass sie zusammen eine mittlere Rauhigkeit von 0,5 bis 5 µm aufweisen.

19. Verfahren nach Anspruch 17, **dadurch gekennzeichnet, dass** die Gleitreibung durch die Einstellung einer definierten Rauhigkeit der Kontakt-Oberfläche der Raffstange minimiert wird.

20. Verfahren nach Anspruch 19, **dadurch gekennzeichnet, dass** die Kontakt-Oberfläche der Raffstange mit einer mittleren Rauhigkeit von 0,3 bis 4,8 µm aufgerauht wird.

21. Verfahren nach einem der Ansprüche 17 bis 20, **dadurch gekennzeichnet, dass** ein Schlauchmaterial mit einer Wandstärke von 20 bis 55 µm und einer Länge von größer 40 m bis 1000 m zu einer knickfesten und füllfertigen Raupe mit einer Raupenlänge von 20 bis 200 cm gerafft wird.

22. Verwendung der raupenfömigen Verpackungshülle nach einem der Ansprüche 1 bis 16 für Kranzwürste, wobei die Verpackungshülle auf ein Füllrohr für das Wurstbrät knickfest und füllfertig aufschiebbar ist.
